# EUROPEAN PATENT SPECIFICATION

(11) **EP 3 560 742 B1**
(45) Date of publication and mention of the grant of the patent: **02.06.2021**
(21) Application number: 19170322.2
(22) Date of filing: 18.04.2019
(51) Int. Cl.: B60J 10/20, B60J 10/40, B60J 10/86, B60J 5/06, B60J 5/04

(54) **SEALING STRUCTURE**
DICHTUNGSSTRUKTUR
STRUCTURE D'ÉTANCHÉITÉ

(30) Priority: 19.04.2018 JP 2018080894
(43) Date of publication of application: 30.10.2019
(73) Proprietor: Nishikawa Rubber Co., Ltd., Hiroshima-shi, Hiroshima 733-8510 (JP)
(72) Inventor: Ogawa, Hirofumi, Hiroshima, 733-8510 (JP)
(74) Representative: Bittner, Thomas L.

(56) References cited:
- DE-A1-102017 008 872
- JP-A- 2005 186 647
- JP-A- 2006 088 984

## Description

The present disclosure relates to sealing structure of a part of a center-pillarless automotive vehicle at which part a first end part of a hinged door, a second end part of a sliding door, and a main weather strip which is provided along a body opening periphery are caused to abut each other.

### Background

Conventionally, there has been a center-pillarless automotive vehicle configured such that (i) a hinged door and a sliding door are each independently movable, (ii) the hinged door is joined to an automotive body with use of a hinge and is rotated so as to be opened and closed, and (iii) the sliding door is opened and closed by means of a sliding mechanism.

Along a body opening periphery of an automotive vehicle of this type, a main weather strip may be provided as a main seal so that water is prevented from entering the automotive vehicle. However, since a space is present between a hinged door and a sliding door, water leakage occurs. In order that this water leakage is avoided, a sealing member is provided to an upper part of a first end part of the hinged door, and a sealing member is provided to an upper part of a second end part of the sliding door. This causes a sealing surface to be formed.

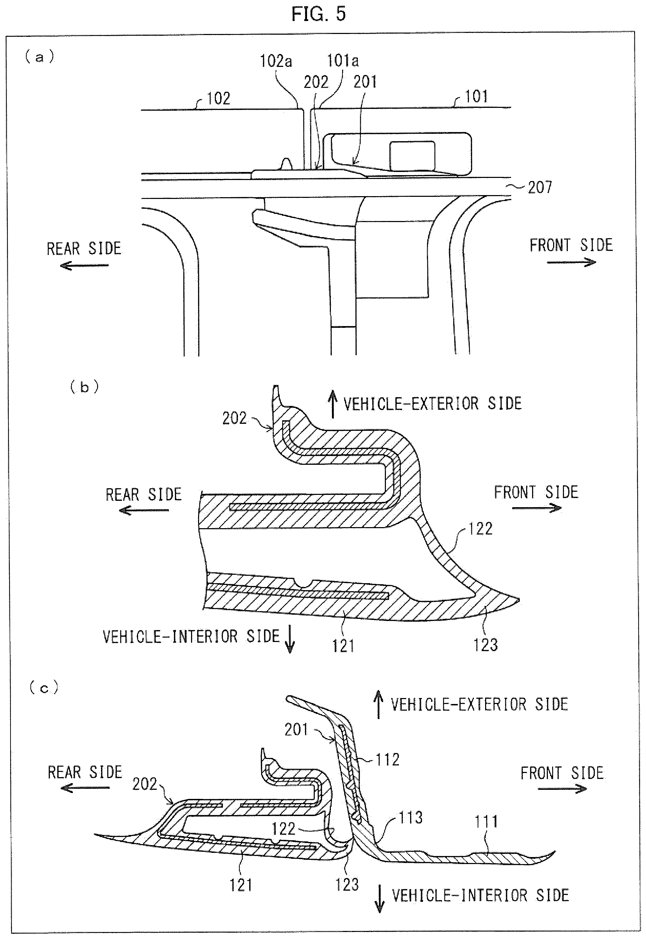

Furthermore, according to a conventional technique disclosed in Fig. 5 of document JP 2006-88984, a tip of each of an upper die-molded part and a lower die-molded part of a weather strip for a sliding door (hereinafter, referred to as a sliding door weather strip) has a shape of a wedge so that insufficient insertion of the tip of the each of the upper die-molded part and the lower die-molded part is avoided.

According to the conventional technique, in a state where the hinged door and the sliding door are closed, the sealing surface against the main weather strip shifts in a direction from a front side to a rear side of the automotive vehicle, that is, shifts from the hinged door to the sealing member, shifts from the sealing member to the sealing member, and shifts from the sealing member to the sliding door. Therefore, in order to keep good watertightness in a state where the hinged door and the sliding door are closed, it is necessary to minimize a clearance (so-called a triangular clearance), which is created on the sealing surface, between the hinged door and the sealing member, a clearance between the sealing member and the sliding door, and a clearance between the sealing member and the sealing member in a case where the hinged door and the sliding door are closed.

In order to attain the above object, it is also necessary to arrange a sealing surface shifting part of the sealing member such that a thickness of a connection part, via which a second curved wall and a third inner wall are connected to each other, is decreased.

As described above, the sliding door includes a sliding mechanism, and the hinged door and the sliding door are each independently openable and closable. Therefore, in a case where the sliding door is opened and closed in a state where the thickness of the connection part of the sealing member is decreased, curling of the connection part occurs, when the sealing member is brought into elastic contact with the sealing member.

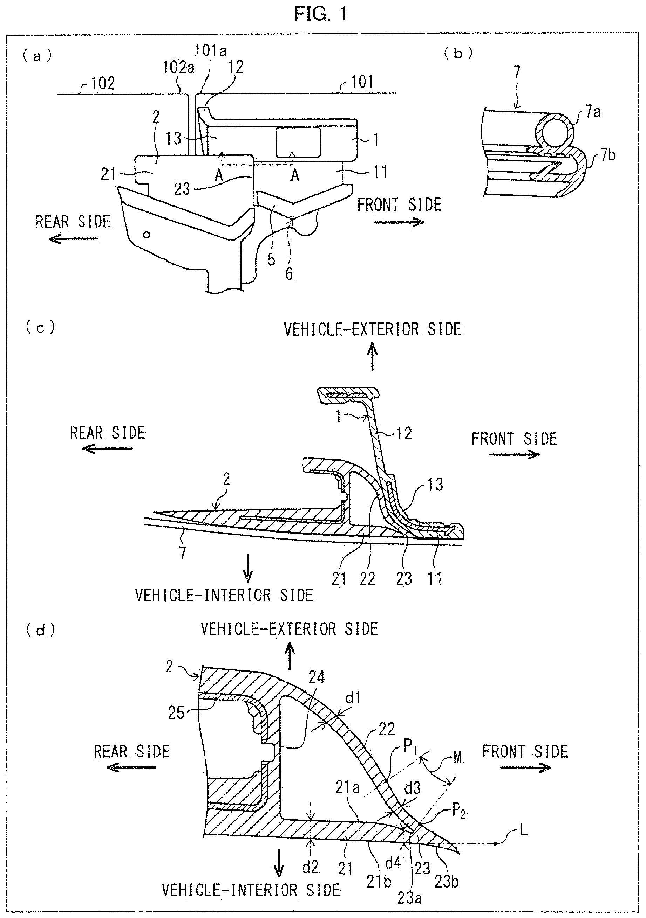

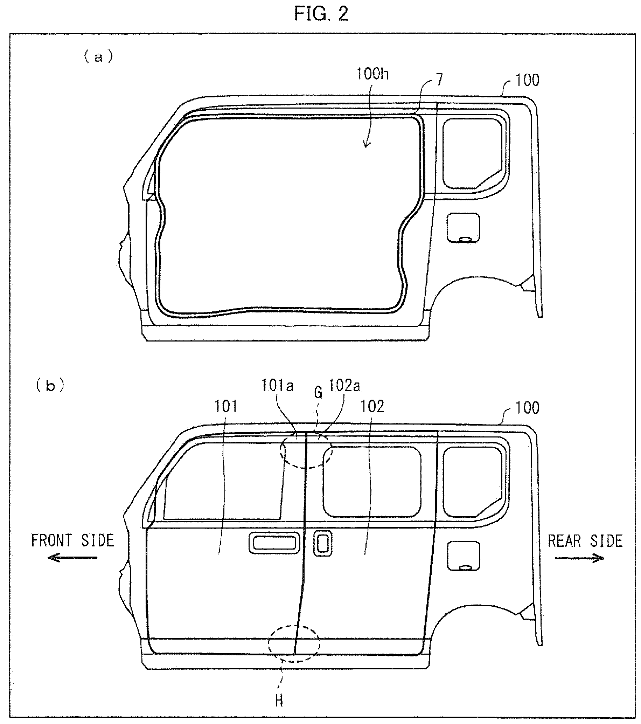

In view of the above, according to a technique disclosed in Figs. 1 and 2 of JP 2006-88984, such curling is avoided by (i) causing die-molded parts of a weather strip for a front door (hereinafter, referred to as a front door weather strip) and the upper die-molded part and the lower die-molded part of the sliding door weather strip not to be brought into elastic contact with each other before the front door weather strip and the sliding door weather strip are brought into elastic contact with a body-side weather strip and (ii) causing a flange F, to which the main weather strip is attached, to move to a vehicle-exterior side for sealing after the hinged door and the sliding door are closed.

That is, the technique disclosed in JP 2006-88984 is not for avoiding curling of a tip of each of an upper die-molded part and a lower die-molded part of a sliding door weather strip which curling occurs in a case where the sliding door weather strip is brought into elastic contact with a front door weather strip after the front door weather strip is brought into elastic contact with a main weather strip. This structure makes a structure of a body of an automotive vehicle complicated, and is therefore not realistic.

### Summary

It is an object to realize a sealing structure which allows avoidance of curling of a connection part of a second sealing member which curling occurs in a case where the second sealing member is brought into elastic contact with a first sealing member.

A sealing structure of claim 1 is provided. According to an aspect, a sealing structure is a sealing structure of a part of a center-pillarless automotive vehicle at which part a first end part of a hinged door, a second end part of a sliding door, and a main weather strip which is provided along a body opening periphery are caused to abut each other, including: a first sealing member which is provided to an upper part of the first end part; and a second sealing member which is provided to an upper part of the second end part, the first sealing member being configured such that a first inner wall, which is located on a vehicle-interior side, and a second inner wall, which is brought into elastic contact with the second sealing member, are connected to each other via a first curved wall, which is curved so as to protrude to a second-sealing-member side, the second sealing member being configured such that a third inner wall, which is located on the vehicle-interior side, and a second curved wall, which is curved in a case where the second curved wall is brought into elastic contact with the first sealing member, are connected to each other via a connection part, which is tapered as the connection part extends toward the first sealing member, an end part of the third inner wall, which end part is located on a connection-part side, being thinner than the other part of the third inner wall, at least a tip of the connection part being located on a vehicle-interior side of a surface of the third inner wall which surface is located on the vehicle-interior side, the first curved wall and the second curved wall being brought into contact with each other in a case where the first end part and the second end part are caused to abut each other.

According to the aspect above, it is possible to avoid curling of a connection part of a second sealing member which curling occurs in a case where the second sealing member is brought into elastic contact with a first sealing member.

The other part of the third inner wall may be thicker than the second curved wall.

The second curved wall is curved so as to, on a rear side, protrude to a vehicle-exterior side and so as to, on a front side, be depressed to the vehicle-exterior side.

The other part of the third inner wall may be substantially uniform in thickness, and may have a shape of a substantially straight line.

At least a part of the second curved wall, which part may be curved so as to, on a front side, be depressed to a vehicle-exterior side, may be uniform in thickness.

### Description of Embodiments

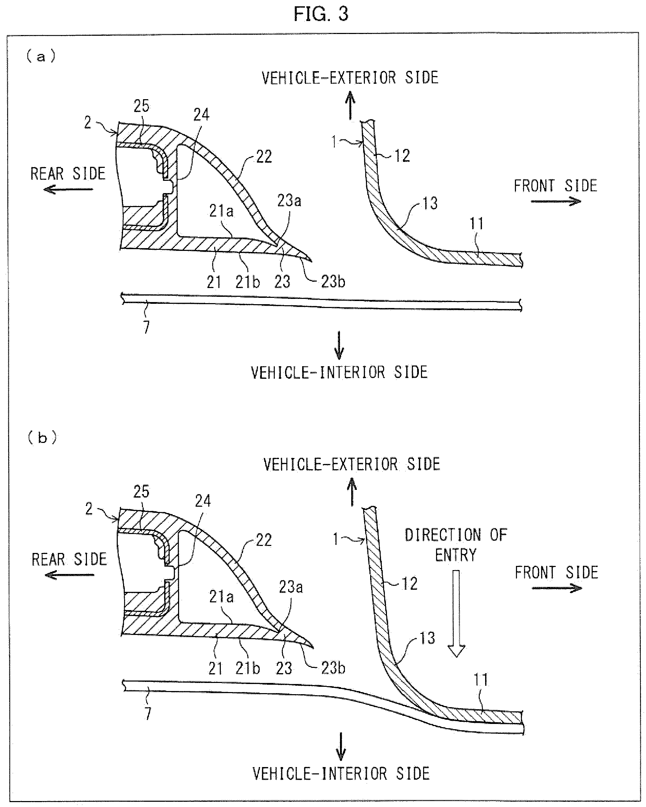

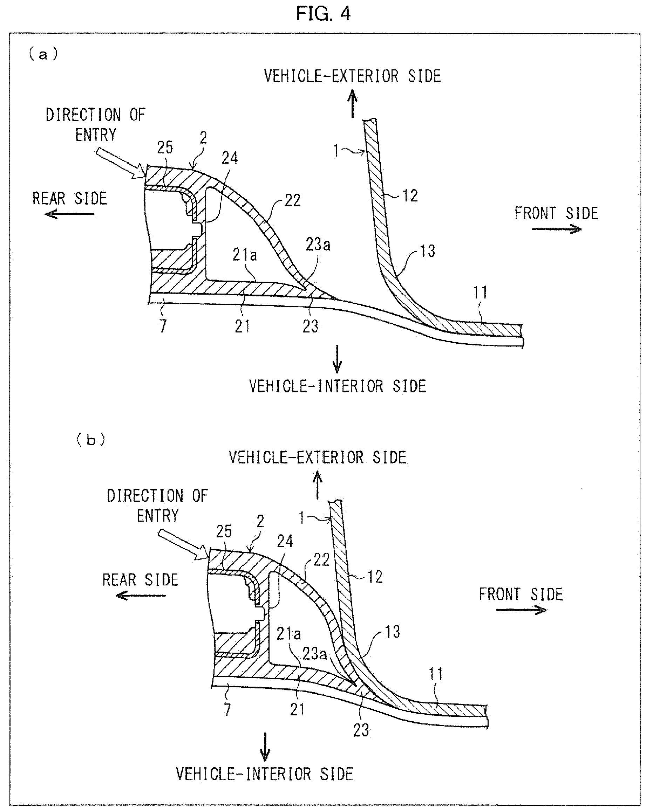

- (a) of Fig. 1: is an elevational view illustrating a left door sealing structure in accordance with an embodiment, as viewed from a vehicle-interior side.
- (b) of Fig. 1: is a perspective view illustrating a main weather strip.
- (c) of Fig. 1: is a cross-sectional view which is taken from a line A-A illustrated in (a) of Fig. 1.
- (d) of Fig. 1: is an enlarged cross-sectional view illustrating a second sealing member, which view is taken from the line A-A.
- (a) of Fig. 2: is a side view illustrating a left side of a center-pillarless automotive vehicle from which left side a hinged door and a sliding door are both detached, as viewed from a vehicle-exterior side.
- (b) of Fig. 2: is a side view illustrating the left side of the center-pillarless automotive vehicle to which left side the hinged door and the sliding door are both attached.
- (a) of Fig. 3: is a cross-sectional view illustrating a state where a first sealing member, the second sealing member, and the main weather strip have not been brought into elastic contact with each other yet.
- (b) of Fig. 3: is a cross-sectional view illustrating a state where a first inner wall of the first sealing member is brought into elastic contact with the main weather strip (that is, a state where the hinged door is first closed) from the state illustrated in (a) of Fig. 3.
- (a) of Fig. 4: is a cross-sectional view illustrating a state where a third inner wall of the second sealing member starts to be brought into elastic contact with the main weather strip (that is, a state where the hinged door is first closed and the sliding door starts to be closed subsequently) from the state illustrated in (b) of Fig. 3.
- (b) of Fig. 4: is a cross-sectional view illustrating a state where a second curved wall of the second sealing member is brought into elastic contact with a first curved wall of the first sealing member (that is, a state where the sliding door finishes being closed subsequently) from the state illustrated in (a) of Fig. 4.
- (a) of Fig. 5: is an elevational view illustrating a conventional left door sealing structure (including a main weather strip), as viewed from a vehicle-interior side.
- (b) of Fig. 5: is a cross-sectional view illustrating a cross-sectional structure, in a vicinity of a connection part, of a conventional second sealing member.
- (c) of Fig. 5: is a cross-sectional view for explaining a problem which arises in a case where the conventional second sealing member is brought into elastic contact with a first sealing member.

### [Outline of structure of side part of center-pillarless automotive vehicle]

As illustrated in (a) of Fig. 2, a side part 100 of a center-pillarless automotive vehicle (hereinafter, merely referred to as an "automotive vehicle") has a body opening in which a center pillar is not present. A main weather strip 7 is provided along a body opening periphery 100h of the body opening. The main weather strip 7 includes a hollow sealing part 7a and an attachment base 7b (see (b) of Fig. 1).

Note that a sealing structure described below is a sealing structure of a part G at which a first end part 101a of a hinged door 101 and a second end part 102a of a sliding door 102 are caused to abut each other, as illustrated in (b) of Fig. 2. More specifically, the sealing structure in accordance with the present embodiment is a sealing structure of a part at which the first end part 101 a of the hinged door 101, the second end part 102a of the sliding door 102, and the main weather strip 7 which is provided along the body opening periphery 100h are caused to abut each other.

### [Outline of sealing structure]

Here, a first sealing member 1 is provided to an upper part of the first end part 101 a of the hinged door 101 as illustrated in (a) of Fig. 1, which corresponds to a view illustrating the sealing structure of the part G, illustrated in (b) of Fig. 2, as viewed from a vehicle-interior side. The first sealing member 1 is a weather strip which is brought into elastic contact with the main weather strip 7 so that sealing performance between the first sealing member 1 and the main weather strip 7 is ensured.

Meanwhile, a second sealing member 2 is provided to an upper part of the second end part 102a of the sliding door 102. The second sealing member 2 is a weather strip which is brought into elastic contact with the main weather strip 7 so that sealing performance between the second sealing member 2 and the main weather strip 7 is ensured. Note that (a) of Fig. 1 illustrates (i) the first sealing member 1 in the form of a perspective view as viewed from diagonally above from a rear side and (ii) the second sealing member 2 in the form of an elevational view as viewed from the vehicle-interior side.

As a material from which each of the first sealing member 1 and the second sealing member 2 is molded, an elastic material such as synthetic rubber or TPE (thermoplastic elastomer) is used. Examples of the synthetic rubber include EPDM (ethylene-propylene-diene copolymer rubber). Examples of the TPE (thermoplastic elastomer) include TPO (olefin-based thermoplastic elastomer). The elastic material used can be a foamed material or can be alternatively a non-foamed material. Furthermore, a core member made of metal, a hard and rigid resin, or the like can be embedded in the elastic material for the purpose of ensuring rigidity. For example, a core member 25 made of metal, a hard and rigid resin, or the like is embedded in the rear side of a connection wall 24 of the second sealing member 2 (see (d) of Fig. 1).

As illustrated in (a) of Fig. 1, a water receiving part 5 is provided on a first inner wall 11 of the first sealing member 1. A drain hole 6, through which water received by the water receiving part 5 is drained to an outside of the automobile vehicle, is provided in a vicinity of a bottom part of the water receiving part 5. This allows water, received by the water receiving part 5, to be ultimately discharged to the outside of the automotive vehicle through the water drain hole 6.

As illustrated in (c) of Fig. 1, the first sealing member 1 is configured such that the first inner wall 11, which is located on the vehicle-interior side, and a second inner wall 12, which is brought into elastic contact with the second sealing member 2, are connected to each other via a first curved wall 13, which is curved so as to protrude to a second-sealing-member-2 side.

The second sealing member 2 is configured such that a third inner wall 21, which is located on the vehicle-interior side, and a second curved wall 22, which is curved in a case where the second curved wall 22 is brought into elastic contact with the first sealing member 1, are connected to each other via a connection part 23, which is tapered as the connection part 23 extends toward the first sealing member 1.

Note that (c) of Fig. 1 illustrates a state where the second curved wall 22 of the second sealing member 2 and the second inner wall 12 (or the first curved wall 13) of the first sealing member 1 have been brought into elastic contact with each other. As illustrated in (c) of Fig. 1, in a case where the second curved wall 22 and the connection part 23 are brought into elastic contact with the second inner wall 12 and the first curved wall 13, the second curved wall 22 and the connection part 23 are elastically deformed so that the second curved wall 22 and the connection part 23 are brought into close contact with the second inner wall 12 and the first curved wall 13. This causes sealing performance between the second curved wall 22 and the second inner wall 12 to be ensured.

As illustrated in (d) of Fig. 1, a thin wall part 23a is provided on a connection-part-23 side of a vehicle-exterior-side side surface 21a (surface located on a vehicle-exterior side) of the third inner wall 21. The thin wall part 23a is such a part that an end part of the third inner wall 21 which end part is located on the connection-part-23 side is thinner than the other part of the third inner wall 21. That is, a thickness d4 of the end part of the third inner wall 21 is thinner than a thickness d2 of the other part of the third inner wall 21 (see (d) of Fig. 1). Furthermore, the thickness d4 of the end part is gradually decreased toward a tip of the connection part 23. By thus suppressing a significant increase in thickness, in a vicinity of the connection part 23, of the third inner wall 21, a triangular clearance, which occurs in a case where the second sealing member 2 is brought into elastic contact with the first sealing member 1, is easily minimized.

Meanwhile, a curved part 23b is provided on the connection-part-23 side of a vehicle-interior-side side surface 21b (surface located on the vehicle-interior side) of the third inner wall 21. The curved part 23b is curved so as to be depressed to the vehicle-interior side. The curved part 23b is such a part that at least the tip of the connection part 23 is curved so that the tip is located slightly on the vehicle-interior side of a line L extending from the vehicle-interior-side side surface 21b of the third inner wall 21.

The curved part 23b causes the first sealing member 1 and the second sealing member 2 to be brought into surface contact with each other between (i) a start of contact of the first sealing member 1 with the second sealing member 2 ((a) of Fig. 4) and (ii) an end of the contact of the first sealing member 1 with the second sealing member 2 ((b) of Fig. 4). This causes a broadened range in which it is possible to avoid curling of the connection part 23. As a result, it is possible to deal with a case where variations in automotive body structure are considerable. For example, according to a connection part 23 having a conventional configuration, curling of the connection part 23 occurs unless the variations in automotive body structure are small, that is, the variations fall within a range of ±1 mm. However, according to the connection part 23 having the foregoing configuration, it is possible to cause curling of the connection part 23 not to occur even in a case where the variations in automotive body structure fall within a range of ±2 mm.

As illustrated in (c) of Fig. 1, by causing the first end part 101a and the second end part 102a to abut each other, the first curved wall 13 and the second curved wall 22 are brought into contact (elastic contact) with each other.

According to the above configuration, the thin wall part 23a is provided on the connection-part-23 side of the vehicle-exterior-side side surface 21a of the third inner wall 21. That is, the end part of the third inner wall 21, which end part is located on the connection-part-23 side, is thinner than the other part of the third inner wall 21. This causes the connection part 23 to be more easily curved due to its elastic deformation in a case where the first curved wall 13 and the second curved wall 22 are brought into contact with each other.

Moreover, according to the above configuration, the curved part 23b is provided on the connection-part-23 side of the vehicle-interior-side side surface 21b of the third inner wall 21, the curved part 23b being curved so as to be depressed to the vehicle-interior side. That is, at least the tip of the connection part 23 is located on the vehicle-interior side of the line L extending from the vehicle-interior-side side surface 21b of the third inner wall 21. This causes the connection part 23 to be more easily curved to the vehicle-interior side due to its elastic deformation.

Thus, in a case where the first end part 101a and the second end part 102a are caused to abut each other and, consequently, the first curved wall 13 and the second curved wall 22 are brought into contact with each other, that is, in a case where the second sealing member 2 is brought into elastic contact with the first sealing member 1, the connection part 23 is brought into elastic contact with the first curved wall 13 and is easily curved to the vehicle-interior side. It is therefore possible to avoid curling of the connection part 23 of the second sealing member 2.

As illustrated in (d) of Fig. 1, the thickness d2 of the third inner wall 21 is greater than a thickness d1 of the second curved wall 22. More specifically, the thickness d2 is approximately 1.3 times to 2.0 times greater than the thickness d1. This allows the second curved wall 22 to be easily elastically deformed while allowing rigidity of the main weather strip 7 with respect to elastic contact to be ensured. Since elastic deformation of the second curved wall 22 causes the first curved wall 13 and the second curved wall 22 to be in close contact with each other, it is possible to increase sealing performance between the first sealing member 1 and the second sealing member 2.

Furthermore, the second curved wall 22 in accordance with the present embodiment is curved so as to, on the rear side, protrude to the vehicle-exterior side and so as to, on a front side, be depressed to the vehicle-exterior side. This causes the second curved wall 22 to be easily brought into closer contact with the first curved wall 13. Therefore, it is possible to cause a sealing surface to be smoother, the sealing surface being formed in a case where the second sealing member 2 is brought into elastic contact with the first sealing member 1.

Moreover, the second sealing member 2 has the connection wall 24 via which the third inner wall 21 and the second curved wall 22 are connected to each other. This allows a further increase in rigidity of the second sealing member 2 with respect to elastic contact with the main weather strip 7.

At least a part M of the second curved wall 22 in accordance with the present embodiment, which part M is curved so as to, on the front side, be depressed to the vehicle-interior side, is generally uniform in thickness (note, here, that the part M is defined as, in (d) of Fig. 1, a part between (i) a change point P1 at which the second curved wall 22 changes from protruding to the vehicle-interior side to being depressed to the vehicle-interior side and (ii) a point P2 at which the second curved wall 22 is connected to the connection part 23). For example, a thickness d3 of the part M on the front side is substantially uniform. Note that the thickness d1 on the rear side can be set so as to be substantially identical to the thickness d3 on the front side or can be alternatively set so as to be slightly greater than the thickness d3 on the front side as necessary. This allows a decrease in total thickness during deformation also at the connection part 23 at which the thickness of the third inner wall 21 and the thickness of the second curved wall 22 are added up. Therefore, it is possible to minimize a triangular clearance which occurs in the vicinity of the connection part 23.

### [State transition of sealing structure]

A state illustrated in (a) of Fig. 3 is a state where the first sealing member 1, the second sealing member 2, and the main weather strip 7 are not in elastic contact with each other. In a case where the first inner wall 11 of the first sealing member 1 is first brought into elastic contact with the main weather strip 7 (that is, in a case where the hinged door 101 is first closed along a direction of entry) in the state illustrated in (a) of Fig. 3, a transition to a state illustrated in (b) of Fig. 3 occurs. In this state, the first inner wall 11 and the main weather strip 7 are in close contact with each other so that sealing is provided between the first inner wall 11 and the main weather strip 7. Further, the main weather strip 7 is elastically deformed so as to be depressed to the vehicle-interior side due to elastic contact with the first inner wall 11.

Next, in a case where the third inner wall 21 of the second sealing member 2 starts to be brought into elastic contact with the main weather strip 7 (that is, in a case where the sliding door 102 starts to be closed subsequently along the direction of entry) in the state illustrated in (b) of Fig. 3, a transition to a state illustrated in (a) of Fig. 4 occurs. In this state, the third inner wall 21 and the main weather strip 7 start to be in close contact with each other so that sealing starts to be provided between the third inner wall 21 and the main weather strip 7.

Thereafter, in a case where the second curved wall 22 of the second sealing member 2 is further brought into elastic contact with the second inner wall 12 (the first curved wall 13) of the first sealing member 1 (that is, in a case where the sliding door 102 finishes being closed along the direction of entry) in the state illustrated in (a) of Fig. 4, a transition to a state illustrated in (b) of Fig. 4 occurs. In this state, a triangular clearance is minimized at a part at which the first sealing member 1, the second sealing member 2, and the main weather strip 7 are caused to abut each other. This is because the curved part 23b is elastically deformed due to elastic contact with the main weather strip 7 and, accordingly, the tip of the connection part 23 and the main weather strip 7 are brought into close contact with each other so that sealing is provided between the connection part 23 and the main weather strip 7.

### [Recap]

In order to attain the above object, a sealing structure is a sealing structure of a part of a center-pillarless automotive vehicle at which part a first end part of a hinged door, a second end part of a sliding door, and a main weather strip which is provided along a body opening periphery are caused to abut each other, including: a first sealing member which is provided to an upper part of the first end part; and a second sealing member which is provided to an upper part of the second end part, the first sealing member being configured such that a first inner wall, which is located on a vehicle-interior side, and a second inner wall, which is brought into elastic contact with the second sealing member, are connected to each other via a first curved wall, which is curved so as to protrude to a second-sealing-member side, the second sealing member being configured such that a third inner wall, which is located on the vehicle-interior side, and a second curved wall, which is curved in a case where the second curved wall is brought into elastic contact with the first sealing member, are connected to each other via a connection part, which is tapered as the connection part extends toward the first sealing member, an end part of the third inner wall, which end part is located on a connection-part side, being thinner than the other part of the third inner wall, at least a tip of the connection part being located on a vehicle-interior side of a surface of the third inner wall which surface is located on the vehicle-interior side, the first curved wall and the second curved wall being brought into contact with each other in a case where the first end part and the second end part are caused to abut each other.

According to the above configuration, the end part of the third inner wall, which end part is located on the connection-part side, is thinner than the other part of the third inner wall. This causes the connection part to be more easily curved due to its elastic deformation in a case where the first curved wall and the second curved wall are brought into contact with each other. Furthermore, at least the tip of the connection part is located on the vehicle-interior side of the surface of the third inner wall which surface is located on the vehicle-interior side. This causes the connection part to be more easily curved to the vehicle-interior side due to its elastic deformation.

Thus, in a case where the first end part and the second end part are caused to abut each other and, consequently, the first curved wall and the second curved wall are brought into contact with each other, that is, in a case where the second sealing member is brought into elastic contact with the first sealing member, the connection part is brought into elastic contact with the first curved wall, and is easily curved to the vehicle-interior side. It is therefore possible to avoid curling of the connection part of the second sealing member.

The sealing structure is preferably arranged such that the other part of the third inner wall is thicker than the second curved wall. The above configuration allows the second curved wall to be easily elastically deformed while allowing rigidity of the main weather strip with respect to elastic contact to be ensured. Since elastic deformation of the second curved wall causes the first curved wall and the second curved wall to be in close contact with each other, it is possible to increase sealing performance between the first sealing member and the second sealing member.

The sealing structure in accordance with an aspect of the present invention is preferably arranged such that the second curved wall is curved so as to, on a rear side, protrude to a vehicle-exterior side and so as to, on a front side, be depressed to the vehicle-exterior side. The above configuration causes the second curved wall to be easily brought into closer contact with the first curved wall. Therefore, it is possible to cause a sealing surface to be smoother, the sealing surface being formed in a case where the second sealing member is brought into elastic contact with the first sealing member.

The sealing structure in accordance with an aspect of the present invention is preferably arranged such that the other part of the third inner wall is substantially uniform in thickness, and has a shape of a substantially straight line. The above configuration allows a further increase in rigidity of the second sealing member with respect to elastic contact with the main weather strip.

The sealing structure in accordance with an aspect of the present invention is preferably arranged such that at least a part of the second curved wall, which part is curved so as to, on a front side, be depressed to a vehicle-exterior side, is uniform in thickness. The above configuration allows a decrease in total thickness during deformation also at the connection part at which a thickness of the third inner wall and a thickness of the second curved wall are added up. Therefore, it is possible to minimize a triangular clearance which occurs in a vicinity of the connection part.

In the foregoing embodiment, only an example of the part G has been described, the part G being an upper one of parts located on a left side of the automotive vehicle (see Fig. 2), at which parts the hinged door 101, which is attached as a side front door, and the sliding door 102, which is attached as a side rear door, are caused to abut each other. However, the present invention can be applied to a part H which is a lower one of the parts located on the left side of the automotive vehicle (see Fig. 2). Similarly, the present invention can be applied to right doors and also can be applied to back doors.

### Reference Signs List

- 1: First sealing member
- 2: Second sealing member
- 7: Main weather strip
- 11: First inner wall
- 12: Second inner wall
- 13: First curved wall
- 21: Third inner wall
- 21a: Vehicle-exterior-side side surface (surface on vehicle-exterior side)
- 21b: Vehicle-interior-side side surface (surface on vehicle-interior side)
- 22: Second curved wall
- 23: Connection part
- 23a: Thin wall part
- 23b: Curved part
- 24: Connection wall
- 100h: Body opening periphery
- 101: Hinged door
- 101a: First end part
- 102: Sliding door
- 102a: Second end part

## Claims

1. A sealing structure of a part of a center-pillarless automotive vehicle at which part a first end part (101a) of a hinged door (101), a second end part (102a) of a sliding door (102), and a main weather strip (7) which is provided along a body opening periphery (100h) are caused to abut each other, comprising:
- a first sealing member (1) which is provided to an upper part of the first end part (101a), and
- a second sealing member (2) which is provided to an upper part of the second end part (102a),
wherein:
- the first sealing member (1) being configured such that a first inner wall (11), which is located on a vehicle-interior side, and a second inner wall (12), which is brought into elastic contact with the second sealing member (2), are connected to each other via a first curved wall (13), which is curved so as to protrude to a second-sealing-member (2) side,
- the second sealing member (2) being configured such that a third inner wall (21), which is located on the vehicle-interior side, and a second curved wall (22), which is curved in a case where the second curved wall (22) is brought into elastic contact with the first sealing member (1), are connected to each other via a connection part (23), which is tapered as the connection part (23) extends toward the first sealing member (1),
- an end part of the third inner wall (21), which end part is located on a connection-part (23) side, being thinner than the other part of the third inner wall (21),
- at least a tip of the connection part (23) being located on a vehicle-interior side of a surface of the third inner wall (21) which surface is located on the vehicle-interior side, and
- the first curved wall (13) and the second curved wall (22) being brought into contact with each other in a case where the first end part (101a) and the second end part (102a) are caused to abut each other,
**characterized in that**
- the end part of the third inner wall (21), which end part is located on the connection-part (23) side, being gradually decreased in thickness toward the tip of the connection part (23),
- the end part, located on the connection-part (23) side, of the third inner wall (21) having a vehicle-exterior-side side surface (21a) that is curved so as to protrude to a vehicle-exterior side, and
- the second curved wall (22) being curved so as to, on a rear side, protrude to the vehicle-exterior side and so as to, on a front side, be depressed to the vehicle-exterior side.

2. The sealing structure as set forth in claim 1, wherein the other part of the third inner wall (21) is thicker than the second curved wall (22).

3. The sealing structure as set forth in claim 1 or 2, wherein the other part of the third inner wall (21) is substantially uniform in thickness, and has a shape of a substantially straight line.

4. The sealing structure as set forth in claim 3, wherein at least a part of the second curved wall (22), which part is curved so as to, on a front side, be depressed to a vehicle-exterior side, is uniform in thickness.

## Patentansprüche

1. Dichtungsanordnung eines Teils eines mittelsäulenlosen Kraftfahrzeugs, an wessen Teil ein erstes Endteil (101a) einer Klapptür (101), ein zweites Endteil (102a) einer Schiebetür (102) und eine Hauptdichtleiste (7), die entlang eines Karosserieöffnungsumfangs (100h) bereitgestellt ist, veranlasst werden, aneinander anzuliegen, die Folgendes aufweist:
- ein erstes Dichtelement (1), das an einem oberen Teil des ersten Endteils (101a) bereitgestellt ist, und
- ein zweites Dichtelement (2), das an einem oberen Teil des zweiten Endteils (102a) bereitgestellt ist,
wobei:
- das erste Dichtelement (1) derart eingerichtet ist, dass eine erste Innenwand (11), die sich an einer Fahrzeuginnenseite befindet, und eine zweite Innenwand (12), die mit dem zweiten Dichtelement (2) in elastische Berührung gebracht wird, über eine erste gekrümmte Wand (13), die derart gekrümmt ist, dass sie zu einem zweiten Dichtelement (2) vorsteht, miteinander verbunden sind,
- das zweite Dichtelement (2) derart eingerichtet ist, dass eine dritte Innenwand (21), die sich an der Fahrzeuginnenseite befindet, und eine zweite gekrümmte Wand (22), die in einem Fall, bei dem die zweite gekrümmte Wand (22) in elastische Berührung mit dem ersten Dichtelement (1) gebracht wird, gekrümmt ist, über ein Verbindungsteil (23), das sich in der Erstreckung des Verbindungsteils (23) zu dem ersten Dichtelement (1) hin verjüngt, miteinander verbunden sind,
- ein Endteil der dritten Innenwand (21), wessen Endteil sich an einer Seite des Verbindungsteils (23) befindet, dünner als das andere Teil der dritten Innenwand (21) ist,
- sich mindestens eine Spitze des Verbindungsteils (23) an einer Fahrzeuginnenseite einer Fläche der dritten Innenwand (21), wessen Fläche sich an der Fahrzeuginnenseite befindet, befindet, und
- die erste gekrümmte Wand (13) und die zweite gekrümmte Wand (22) in einem Fall, bei dem veranlasst wird, dass das erste Endteil (101a) und das zweite Endteil (102a) aneinander anliegen, miteinander in Berührung gebracht werden,
**dadurch gekennzeichnet, dass**
- das Endteil der dritten Innenwand (21), wessen Endteil sich an der Seite des Verbindungsteils (23) befindet, zu der Spitze des Verbindungsteils (23) hin graduell in der Dicke abnimmt,
- das Endteil, das sich an der Seite des Verbindungsteils (23) der dritten Innenwand (21) befindet, eine Fahrzeugaußenseitenseitenfläche (21a), die derart gekrümmt ist, zu einer Fahrzeugaußenseite vorzustehen, aufweist, und
- die zweite gekrümmte Wand (22) derart gekrümmt ist, dass sie an einer Rückseite zu der Fahrzeugaußenseite vorsteht und dass sie an einer Vorderseite zu der Fahrzeugaußenseite gedrückt ist.

2. Dichtungsanordnung nach Anspruch 1, wobei das andere Teil der dritten Innenwand (21) dicker als die zweite gekrümmte Wand (22) ist.

3. Dichtungsanordnung nach Anspruch 1 oder 2, wobei das andere Teil der dritten Innenwand (21) im Wesentlichen eine einheitliche Dicke aufweist und eine Form einer im Wesentlichen geraden Linie aufweist.

4. Dichtungsanordnung nach Anspruch 3, wobei mindestens ein Teil der zweiten gekrümmten Wand (22), wessen Teil derart gekrümmt ist, dass es an der Vorderseite zu der Fahrzeugaußenseite gedrückt ist, eine einheitliche Dicke aufweist.

## Revendications

1. Structure d'étanchéité d'une pièce d'un véhicule automobile sans montant central au niveau de laquelle pièce une première partie terminale (101a) d'une porte à charnière (101), une seconde partie terminale (102a) d'une porte coulissante (102), et un bourrelet étanche principal (7) qui est prévu le long d'une périphérie d'ouverture de corps (100h) sont amenés à buter les uns contre les autres, comprenant :
- un premier élément d'étanchéité (1) qui est prévu sur une partie supérieure de la première partie terminale (101a), et
- un second élément d'étanchéité (2) qui est prévu sur une partie supérieure de la seconde partie terminale (102a),
dans laquelle :
- le premier élément d'étanchéité (1) est conçu de manière à ce qu'une première paroi intérieure (11), qui est située sur une face intérieure de véhicule, et une deuxième paroi intérieure (12), qui est amenée en contact élastique avec le second élément d'étanchéité (2), soient connectées l'une à l'autre via une première paroi courbée (13) qui est courbée de manière à dépasser jusqu'à un côté (2) du second élément d'étanchéité,
- le second élément d'étanchéité (2) est conçu de manière à ce qu'une troisième paroi intérieure (21), qui est située sur la face intérieure de véhicule, et une seconde paroi courbée (22), qui est courbée dans un cas où la seconde paroi courbée (22) est amenée en contact élastique avec le premier élément d'étanchéité (1), soient connectées l'une à l'autre via une pièce de connexion (23) qui est effilée du fait que la pièce de connexion (23) s'étend vers le premier élément d'étanchéité (1),
- une partie terminale de la troisième paroi intérieure (21), laquelle partie terminale est située sur une face (23) de la pièce de connexion, est plus mince que l'autre partie de la troisième paroi intérieure (21),
- au moins une pointe de la pièce de connexion (23) est située sur une face intérieure de véhicule d'une surface de la troisième paroi intérieure (21), laquelle surface est située sur la face intérieure de véhicule, et
- la première paroi courbée (13) et la seconde paroi courbée (22) sont amenées en contact l'une avec l'autre dans un cas où la première partie terminale (101a) et la seconde partie terminale (102a) sont amenées à buter l'une contre l'autre,
**caractérisée en ce que**
- la partie terminale de la troisième paroi intérieure (21), laquelle partie terminale est située sur la face (23) de la pièce de connexion, a une épaisseur diminuant graduellement vers la pointe de la pièce de connexion (23),
- la partie terminale, située sur la face (23) de la pièce de connexion, de la troisième paroi intérieure (21) comporte une surface de côté extérieur au niveau de l'extérieur du véhicule (21a) qui est courbée de manière à dépasser vers un côté extérieur du véhicule, et
- la seconde paroi courbée (22) est courbée de manière à dépasser, sur une face arrière, du côté extérieur du véhicule et, sur une face avant, à être en dépression dans le côté extérieur du véhicule.

2. Structure d'étanchéité selon la revendication 1, dans laquelle l'autre partie de la troisième paroi intérieure (21) est plus épaisse que la seconde paroi courbée (22).

3. Structure d'étanchéité selon la revendication 1 ou 2, dans laquelle l'autre partie de la troisième paroi intérieure (21) est d'une épaisseur substantiellement uniforme et a une forme linéaire substantiellement droite.

4. Structure d'étanchéité selon la revendication 3, dans laquelle au moins une partie de la seconde paroi courbée (22), laquelle partie est courbée de manière à être en dépression sur une face avant par rapport à un côté extérieur du véhicule, est d'épaisseur uniforme.
